(19) Europäisches Patentamt
European Patent Office
Office européen des brevets

(11) **EP 2 260 549 B1**

(12) **FASCICULE DE BREVET EUROPEEN**

(45) Date de publication et mention
de la délivrance du brevet:
**06.09.2017 Bulletin 2017/36**

(21) Numéro de dépôt: **09724063.4**

(22) Date de dépôt: **27.03.2009**

(51) Int Cl.:
**H01S 3/067** (2006.01)

(86) Numéro de dépôt international:
**PCT/EP2009/053648**

(87) Numéro de publication internationale:
**WO 2009/118404 (01.10.2009 Gazette 2009/40)**

(54) **SYSTÈME À FIBRE LASER DE FORTE PUISSANCE**

HOCHLEISTUNGSLASERFASERSYSTEM

HIGH-POWER LASER FIBRE SYSTEM

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **28.03.2008 FR 0801714**

(43) Date de publication de la demande:
**15.12.2010 Bulletin 2010/50**

(73) Titulaire: **Thales
92400 Courbevoie (FR)**

(72) Inventeurs:
• **POCHOLLE, Jean-Paul
F-91290 La Norville (FR)**
• **DOITTAU, François-Xavier
F-78910 Behoust/Orgerus (FR)**

(74) Mandataire: **Esselin, Sophie
Marks & Clerk France
Conseils en Propriété Industrielle
Immeuble Visium
22 avenue Aristide Briand
94117 Arcueil Cedex (FR)**

(56) Documents cités:
EP-A- 1 764 350      WO-A-2006/090002
JP-A- 10 125 988     JP-A- 2007 179 058
US-A- 5 333 218      US-A1- 2007 041 083

• XIE WEN ET AL: "Single mode parabolic gain guiding optical fiber with core diameter up to 200 mum" INTERNATIONAL JOURNAL OF INFRARED AND MILLIMETER WAVES, vol. 29, 28 février 2008 (2008-02-28), pages 406-415, XP002513190 USA
• LI ET AL: "High power single transverse mode operation of a tapered large-mode-area fiber laser" OPTICS COMMUNICATIONS, NORTH-HOLLAND PUBLISHING CO. AMSTERDAM, NL, vol. 281, no. 4, 29 octobre 2007 (2007-10-29), pages 655-657, XP022409140 ISSN: 0030-4018
• A.S KURKOV ET AL: "Ytterbium-doped fibre laser with a Bragg grating reflector written in a multimode fibre" Quantum Electronics Turpion Ltd.; Kvantovaya Elektronika UK, vol. 35, no. 4, avril 2005 (2005-04), pages 339-340, XP002513191 Stevenage ISSN: 1063-7818
• W A GAMBLING ET AL: "Cut-off frequency in radially inhomogeneous single-mode fibre" Electronics Letters UK, vol. 13, no. 5, 3 mars 1977 (1977-03-03), pages 139-140, XP002513192 stevenage ISSN: 0013-5194 cité dans la demande

EP 2 260 549 B1

**Description**

Le domaine de l'invention est celui des sources laser de forte puissance de la classe 100W à quelques kW voire la dizaine de kW et plus précisément celui des sources laser fibrées opérant en mode continu ou quasi-continu destinées notamment à éclairer une cible.

Pour réaliser de tels systèmes on cherche généralement à utiliser des fibres unimodales à faible différence d'indice permettant d'obtenir une propagation monomode avec un grand rayon de coeur.

En effet, toute source optique devant être mise en oeuvre pour le dépôt de puissance (ou d'énergie) à distance se doit de présenter la luminance la plus élevée afin d'avoir les plus forts éclairements (ou fluence) sur une cible.

Les fibres laser sont aujourd'hui les sources permettant d'obtenir les plus importantes luminances. La luminance d'une source est exprimée selon la loi :

$$Lum \ (W/m^2.sr) = \frac{P_L(W)}{S(m^2)\Omega(sr)}$$

$P_L$ est la puissance optique délivrée par la source, S est la surface émissive et $\Omega$ représente l'angle solide de rayonnement. Le produit $S \times \Omega$ est dénommé l'étendue géométrique qui est un invariant en optique.

Pour une fibre optique opérant en régime unimodal (ou monomode) la condition sur le rayon de coeur a et sur la différence d'indice relative $\Delta \approx \dfrac{n_1 - n_2}{n_1}$ ($n_1$ correspond à l'indice de réfraction du matériau de coeur et $n_2$ à celui qui caractérise la gaine optique) est représentée par l'équation suivante comme explicité dans la publication « Weakly guiding fibers » D.Gloge Appl.Opt.10 (10),Oct.1971 p.2252 :

$$V = ka\sqrt{n_1^2 - n_2^2} \approx kan_1\sqrt{2\Delta} \leq 2.4048$$

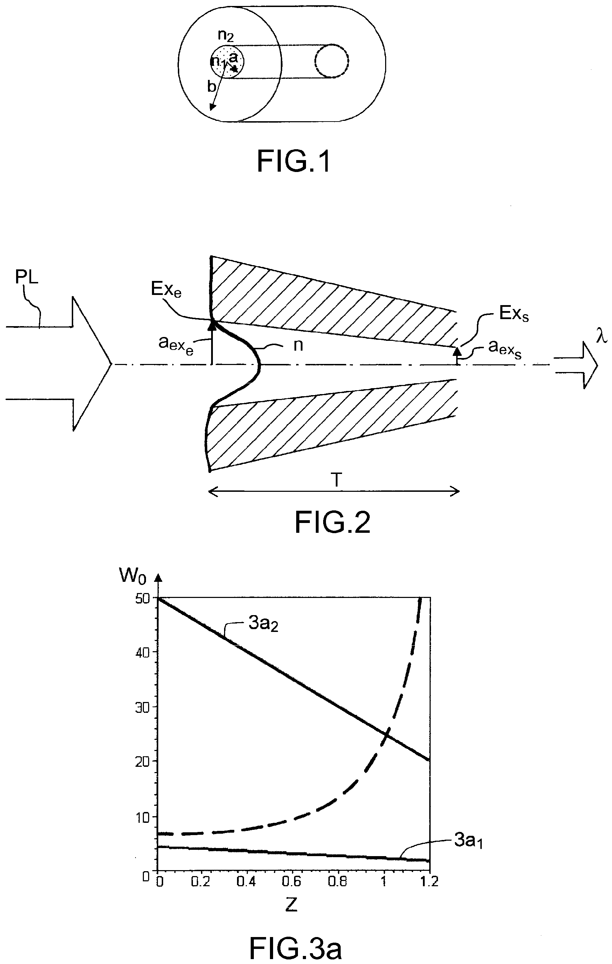

où V est un paramètre dénommé fréquence normalisée et $k = 2\pi/\lambda$ avec $\lambda$ la longueur d'onde. Cette condition est applicable pour une fibre dite à échelon d'indice. La figure 1 illustre les différents paramètres opto-géométriques caractéristiques d'une fibre optique standard.

Afin de réduire la manifestation d'effets non linéaires on doit favoriser l'emploi de structures de guidage caractérisées par une surface de mode la plus importante possible.

Pour cela il convient de résoudre la problématique suivante : une grande dimension de mode nécessite la réalisation d'une fibre à très faible différence d'indice. Ceci entraîne une propagation à très faible guidage ce qui rend la manipulation de la fibre très critique car très sensible à toute courbure ou micro-courbure. Inversement, la réalisation d'une fibre à forte différence d'indice implique un faible rayon de coeur, ce qui n'est pas satisfaisant vis-à-vis des effets non linéaires pouvant se développer.

Dans ce contexte la présente invention propose un système à fibre laser de forte puissance comportant au moins une fibre dont les propriétés optiques sont optimisées grâce à des propriétés opto-géométriques particulières.

Plus précisément l'invention a pour objet un système à fibre laser selon la revendication 1 comportant au moins une fibre laser monomode, émettant à une longueur d'onde signal (À), ladite fibre comportant au moins une gaine extérieure et un coeur, ladite fibre présentant en son coeur un gradient d'indice radial caractérisé en ce que le système étant un laser de puissance, ladite fibre comporte au moins sur une partie de sa longueur, un tronçon de géométrie présentant un rayon de coeur de fibre à gradient décroissant entre une extrémité dite d'entrée du tronçon et une extrémité dite de sortie du tronçon. Xie Ween et al " Single mode parabolic gain guiding optical fiber with core diameter up to 200 mum" International Journal of Infrared and Milimeter Waves, vol. 29, 28-2-2008 , décrit un système à fibre laser comportant au moins une fibre monomode, ladite fibre comportant au moins une gaine extérieure et un coeur avec un gradient d'indice radial.

US5333218 A décrit un système à fibre laser comportant au moins une fibre monomode, ladite fibre comportant au moins une gaine extérieure et un coeur avec une partie effilée. Selon une variante de l'invention, le gradient d'indice est de type parabolique.

Selon une variante de l'invention, le gradient d'indice est de type triangulaire.

Selon une variante de l'invention, la fibre comporte un tronçon de géométrie conique, un premier rayon de gaine $r_1$ et un second rayon de coeur $r_2$, les premier et second rayons étant définis respectivement par les équations suivantes :

$$r_1(z) = r_{1c}(1 - m_1 z)$$

$$r_2(z) = r_{2c}(1 - m_2 z)$$

Selon l'invention, le système comprend plusieurs fibres monomodes, réparties de manière à créer un couplage modal entre lesdites fibres, une des fibres étant une fibre émergente pour la longueur d'onde signal du faisceau laser d'émission

Selon une variante de l'invention, les fibres sont réparties selon une géométrie matricielle dans un plan perpendiculaire à la longueur des dites fibres.

Selon une variante de l'invention, les fibres sont réparties de manière circulaire autour d'une fibre centrale.

Selon une variante de l'invention, le système comprend une préforme comportant un ensemble de barreaux qui constituent les gaines et les coeurs de fibres unitaires après fibrage.

Selon une variante de l'invention, le système laser comprend :

- une fibre amorce destinée à recevoir une puissance de pompe issue de diodes laser ;
- un ensemble de fibres couplées radialement et étirée afin d'optimiser le couplage ;
- une fibre centrale par laquelle émerge la longueur d'onde signal du faisceau laser.

Selon une variante de l'invention, la fibre émergente comporte une fonction miroir, ce miroir peut avantageusement être de type réflecteur de Bragg (par photo-inscription).

Selon une variante de l'invention, le système comprend des moyens de type axicon couplés aux extrémités des fibres opposées à celles comportant les tronçons coniques de manière à réaliser une opération de multiplexage sur des états de polarisation différents d'une onde signal.

Selon une variante de l'invention, le système comporte au moins une fibre présentant une gaine en silice.

Selon une variante de l'invention, le système comporte au moins une fibre présentant un coeur comportant de la silice dopée par un oxyde tel que $GeO_2$ .

Selon une variante de l'invention, le coeur de fibre comprend des couches périphériques à taux variables de $GeO_2$ de manière à assurer un gradient d'indice radial au sein du coeur.

Selon une variante de l'invention, le système comporte au moins une fibre présentant un coeur comportant de la silice dopée avec des ions de type terre rare pour assurer les effets laser.

L'invention sera mieux comprise et d'autres avantages apparaitront à la lecture de la description qui va suivre donnée à titre non limitatif et grâce aux figures annexées parmi lesquelles :

- la figure 1 illustre les différents paramètres opto-géométriques caractéristiques d'une fibre optique ;
- la figure 2 schématise une fibre laser de puissance, utilisée dans un système laser selon l'invention
- la figure 3a illustre l'évolution du rayon du mode $HE_{11}$ en fonction de la distance dans une structure de fibre effilée;
- la figure 3b illustre la distribution de l'éclairement en fonction de la distance radiale et de la distance de propagation dans la fibre effilée ;
- la figure 3c illustre l'éclairement en z = 1m pour une fibre présentant une conicité de 50% à partir d'un diamètre initial de 100$\mu$m ;
- la figure 4 illustre la distribution de l'éclairement en fonction de la distance pour trois fibres de diamètre initial de 100$\mu$m et comportant des tronçons effilés avec une conicité de 50% sur 1m ;
- la figure 5 illustre un tracé de l'évolution du rayon du mode normalisé au rayon de coeur d'une fibre en fonction du paramètre fréquence normalisée et en fonction du gradient d'indice ;
- la figure 6 illustre un tracé de l'évolution du rayon du mode $HE_{11}$ en fonction de la structure dans une fibre effilée à profil parabolique ;
- la figure 7 illustre un tracé de l'évolution de l'éclairement en fonction de la distance dans la partie conique pour une fibre à profil d'indice ;
- la figure 8 illustre un tracé l'évolution de l'éclairement $|a_1(z)|^2$ à une longueur d'onde donnée;
- la figure 9 illustre un coupleur linéaire à deux fibres ;
- la figure 10 illustre l'évolution du coefficient de couplage entre les deux fibres et ce en fonction de la séparation normalisée entre les deux guides sur le domaine spectral occupé par le signal (laser) ;
- les figures 11a, 11b et 11c illustrent le comportement du coupleur à fibre en fonction de la longueur d'onde, de la distance de propagation et de l'espacement normalisé entre les deux coeurs des fibres optiques ;
- la figure 12a représente l'évolution du coefficient de couplage local en fonction de la distance z :
- la figure 12b illustre le facteur de couplage effectif $C_{eff}z$ avec la distance z dans la partie effilée ;
- la figure 12c illustre la distribution d'éclairement normalisée du guide excité dans une configuration de coupleur linéaire à structure conique à 1.07µm (courbe $12c_0$) et à 1.09 µm (courbe $12c_1$) en fonction de la distance de propagation.
- la figure 13a illustre une variante de l'invention dans laquelle, les fibres laser sont assemblées selon une symétrie carré ;
- les figures 13b et 13c illustrent les phénomènes de couplage entre guides en fonction de la distance de propagation et de la longueur d'onde ;
- la figure 13d illustre la distribution de l'éclairement dans le guide 1 en fonction de z et pour différentes longueurs d'onde ;
- la figure 14a illustre une géométrie d'empilement de fibres symétrique à configuration cylindrique ;
- la figure 14b illustre l'évolution de l'éclairement de la fibre central ainsi que celui obtenu sur une des fibres à couplage périphérique en fonction de la distance de propagation avec $s$ = 5 et à 1.07µm et la figure 14c illustre un aperçu de la distribution spectrale en sortie de fibres (centrale et en périphérie) ;
- la figure 15a illustre une vue en perspective d'un réseau de fibres réparties de manière cylindrique utilisée dans une variante de l'invention;
- la figure 15b illustre une vue en coupe d'une autre variante de l'invention, dans laquelle une préforme comporte un ensemble de gaines et de coeurs de fibre unitaires ;
- la figure 16a illustre une vue en coupe d'une variante de système laser selon l'invention ;
- la figure 16b illustre une autre variante de l'invention comportant une optique de type axicon ;
- la figure 17 illustre l'évolution de l'indice de réfraction de la silice dopée en $GeO_2$ ;
- la figure 18 illustre une étape de réalisation de fibre utilisée dans l'invention.

Le coeur de l'invention réside dans l'utilisation de fibre dont le coeur présente un profil d'indice radial pour réaliser un système à fibre laser de puissance. Ce profil peut notamment être de type parabolique ou triangulaire, les performances obtenues avec ce type de configuration seront détaillées dans la description ci-après.

Il peut être par ailleurs particulièrement intéressant de combiner un tel profil d'indice radial à un gradient longitudinal de coeur de fibre.

La figure 2 schématise ainsi une fibre laser de puissance utilisée dans un système laser selon l'invention. Cette fibre est destinée à être alimentée par une puissance laser $P_L$, pour en sortie de fibre générer un faisceau laser émettant à une longueur d'onde signal $\lambda$.

Cette fibre comporte un tronçon T présentant une extrémité d'entrée Exe et une extrémité de sortie Exs, un gradient de rayon de coeur longitudinal et un profil d'indice radial.

L'analyse ci-dessous porte sur les propriétés obtenues avec un tel gradient décroissant de rayon de coeur de fibre :

De manière connue, bien que la solution des équations de Maxwell appliquées à une structure à deux diélectriques et à symétrie cylindrique aboutit à exprimer la distribution radiale du champ sous la forme de fonctions de Bessel et de fonctions de Bessel modifiées de première espèce, on peut approximer cette distribution du champ par une loi gaussienne avec un rayon de mode à 1/e (en champ et à $1/e^2$ en éclairement) prenant la forme :

$$w_0(\lambda) = a\left(0.65 + \frac{1.619}{V^{3/2}(\lambda)} + \frac{2.879}{V^6(\lambda)}\right)$$

Cette loi établie par D. Marcuse et décrite notamment dans l'article « Loss analysis of single-mode fiber splices » Bell Syst.Tech. J., vol 56, no.5, 1977, p.703-719 est applicable sur le domaine 0.8<$V$<2.8. Une variante permet de relier directement l'évolution du mode avec la longueur d'onde signal (le laser dans le cas considéré) pour une longueur d'onde de coupure $\lambda_c$ donnée.

Cette longueur d'onde $\lambda_c$ définit le domaine spectral à partir duquel seul le groupe de modes $HE_{11}$ avec ses deux états propres en polarisation ($LP_{01}$) peut se propager sans pertes (au sens électromagnétique). Pour des longueurs d'onde signal plus petites, le groupe de modes $LP_{11}$ peut exister et se propager avec le groupe de modes $LP_{01}$ (régime multimodal). Cette relation est la suivante :

$$w_0(\lambda) \approx a\left(0.65 + 0.434\left(\frac{\lambda}{\lambda_c}\right)^{3/2} + 0.0149\left(\frac{\lambda}{\lambda_c}\right)^6\right)$$

A titre d'exemple, il est possible d'évaluer l'évolution du rayon du mode à partir des données opto-géométriques qui caractérisent une fibre optique.

En présence d'un étirement linéaire, la dimension du mode augmente en fonction du rapport $\lambda/\lambda_c$ bien que le rayon du coeur diminue.

Ainsi à titre d'exemple, on peut considérer une fibre laser émettant une onde signal à $\lambda=1.07\mu m$ et présentant un rayon de coeur et des variations d'indice $\Delta=10^{-3}$ tels que la longueur d'onde de coupure initiale soit égale à $\lambda_c=0.75\mu m$. Cette longueur d'onde de coupure $\lambda_c=0.75\mu m$ correspond à un paramètre fréquence normalisée $V=2.4048$ et un rayon de mode $w_0(0.75\mu m)=4.85\mu m$.

A la longueur d'onde signal on a un paramètre V qui vaut $V=1.68$ et une dimension de mode (rayon) $w_0(1.07\mu m)=6.715\mu m$.

Ces paramètres conduisent à un mode $HE_{11}$ faiblement confiné dans la zone couverte par le rayon de coeur de la fibre.

Typiquement la fibre présente un diamètre de gaine de 100 $\mu$m. Il est à noter que généralement les fibres laser dite à double gaine sont caractérisées par un diamètre de gaine de l'ordre de 400 $\mu$m afin de coupler des diodes de pompage par l'intermédiaire d'un ensemble de coupleurs multimodes.

Selon une première variante proposée dans l'invention, le gradient de rayon de coeur de fibre peut être un profil conique, c'est-à-dire que typiquement, en présence d'un étirement sur une distance arbitraire de 1m afin d'obtenir un couplage adiabatique avec une conicité de 50%, ce qui correspond à un passage d'un diamètre de gaine initial de $100\mu$m à $50\mu$m, il est possible de décrire l'évolution des différents rayons (coeur et gaine) selon la loi d'homothétie :

$$\left.\begin{array}{c}b(z)\\a(z)\end{array}\right\} = \begin{cases}b_C(1-0.5z)\\a_C(1-0.5z)\end{cases}$$

L'évolution du rayon du mode en fonction de la distance est alors représentée sur la figure 3a, les droites $3a_1$ et $3a_2$ représentant respectivement l'évolution des rayons de coeur et de gaine en fonction de la distance z.

En extrémité de la partie effilée, le paramètre fréquence normalisée correspond à $V=0.84$, valeur proche de celle associée à la limite de validité de la loi définissant le modèle gaussien de la distribution modale du mode $HE_{11}$ ou groupe de modes $LP_{01}$. Il ressort des courbes illustrées en figure 3a que sur une longueur de tronçon à profil conique de $z\approx1m$, le rayon du mode à 1/e en champ est sensiblement égal au rayon de la gaine. Au delà, le mode subit des effets de diffraction et de réfraction qui se traduisent par des pertes de rayonnement.

On sait que le seuil d'endommagement optique d'un milieu diélectrique (en terme de fluence $(J/m^2)$ ou en terme d'éclairement $(W/m^2)$) est toujours plus faible au niveau de l'interface comparativement à celui qui caractérise la tenue en volume. La géométrie conique permet ainsi de résoudre en partie cette limitation. En particulier si l'on recherche à maximiser la puissance optique pouvant être délivrée par un laser ou un système amplificateur à fibre optique.

Ainsi, deux conditions sont à remplir, qui consistent à développer des fibres optiques unimodales qui doivent présenter une faible longueur d'onde de coupure pour le groupe de modes $LP_{11}$, par rapport à la longueur d'onde signal et une conicité de l'extrémité de chaque fibre laser.

Il est alors possible d'évaluer les effets d'un étirement sur le champ, prenant en compte un éclairement proportionnel au module du champ au carré :

$$I(r,z) \propto |E|^2$$

Afin de rendre compte de l'extension radiale du mode on évalue la distribution de l'éclairement. Pour cela, on définit la puissance véhiculée par le mode selon la loi :

$$P_T = I_0(z)\int_0^{2\pi}\int_0^{\infty}e^{-2\left(\frac{r}{w_0(z)}\right)^2} r \, dr \, d\phi = I_0 \frac{\pi w_0^2(z)}{2}$$

et la distribution de l'éclairement (W/m$^2$) devient :

$$I(r,z) = \frac{2P_T}{\pi w_0^2(z)} e^{-2\left(\frac{r}{w_0(z)}\right)^2}$$

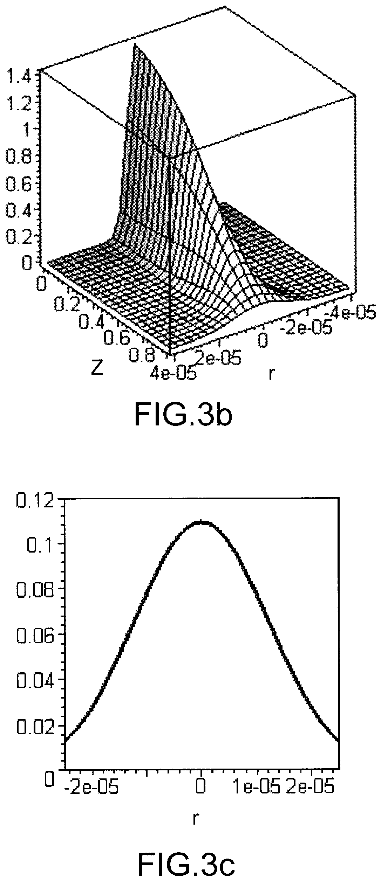

La distribution de l'éclairement en fonction de la distance radiale et de la distance de propagation dans la fibre étirée est représentée en figure 3b, en considérant une puissance optique véhiculée de 1W.

En se plaçant à la distance $z=1m$, on observe que la répartition de la puissance n'est pas contenue dans le diamètre de gaine (50$\mu$m dans le cas évalué).

La figure 3c donne la distribution d'éclairement à cette cote et pour la conicité proposée.

Un calcul élémentaire donne le pourcentage de puissance contenu dans une ouverture circulaire centrée de rayon b :

$$\eta_g = \frac{\int_0^b e^{-2\left(\frac{r}{w_0}\right)^2} r\, dr}{\int_0^\infty e^{-2\left(\frac{r}{w_0}\right)^2} r\, dr} = 1 - e^{-2\left(\frac{b}{w_0}\right)^2}$$

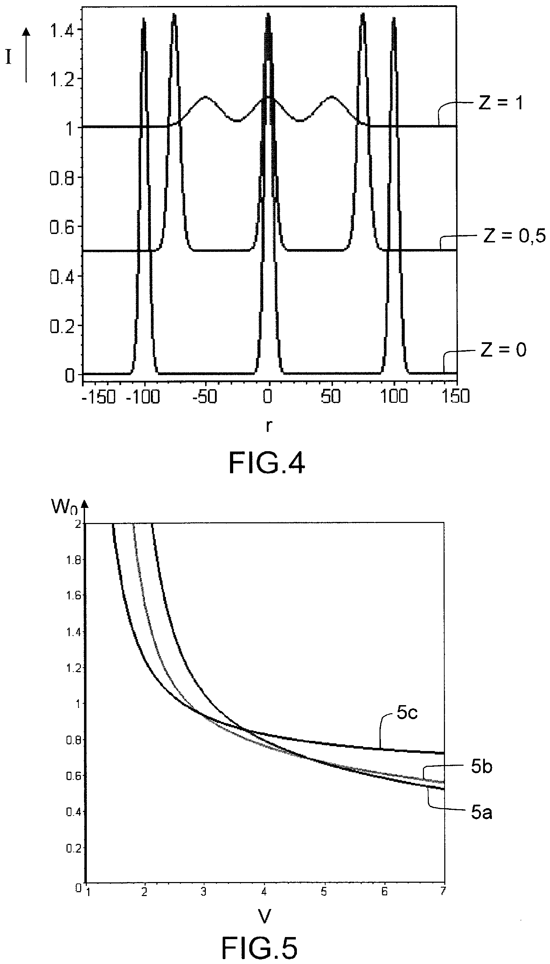

A partir de ces données liminaires, il est possible d'évaluer l'association de plusieurs fibres en ruban, par exemple trois subissant collectivement un effilement de leurs extrémités. En considérant une addition incohérente et en absence de phénomène de couplage entre modes, on peut obtenir une loi de répartition d'éclairement illustrée sur la figure 4.

On obtient ainsi une densité de puissance globale faible en sortie de fibre ainsi qu'une surface effective d'émission réduite. Une telle architecture revient donc à satisfaire aux règles de tenue au flux optique tout en augmentant la luminance de la source émissive.

Le coeur de l'invention réside dans l'utilisation de fibre dont le coeur présente un profil d'indice. Ce profil peut notamment être de type parabolique ou triangulaire.

On peut considérer une loi de distribution du gradient d'indice de type Gloge-Marcatili telle que décrite notamment dans "Multimode theory of graded core fibers" D. Gloge, E.A.J. Marcatili, Bell Sys.Tech.J., vol.52, 1973, p.1563-1578:

$$n^2(r) = \begin{cases} n_1^2\left(1 - 2\Delta(r/a)^\alpha\right), & r \le a \\ n_1^2\left(1 - 2\Delta\right) & ; |r| > a \end{cases}$$

Pour $\alpha=2$ (profil parabolique), le paramètre fréquence normalisée de coupure du groupe de modes adjacent au groupe de mode LP$_{01}$ (unimodal) vaut $V_c=3.518$, comme décrit dans l'article "Cut-off frequency in radially inhomogeneous single-mode fibre" W.A. Gambling, D.N. Payne, H. Matsumura, Electr. Lettes 13 (5) 3rd March 1977 p. 139, que l'on doit comparer à la valeur du paramètre $V_c=2.4048$ pour une fibre à échelon d'indice ($\alpha=\infty$).

On augmente ainsi le rayon de coeur dans le rapport $V_c(\alpha=2)/V_c(\alpha=\infty)=1.463$. Ce rapport est encore plus important si l'on considère un profil triangulaire pour lequel $V_c=4.381$, d'où : $V_c(\alpha=1)/V_c(\alpha=\infty)=1.8218$.

Une loi plus générale établissant l'évolution du rayon du mode en fonction du paramètre V, pour une fibre à profil parabolique, est donnée par D. Marcuse, "Gaussian approximation of the fundamental modes of graded-index fibers", JOSA 68 (1) Jan. 1978 p. 103.

$$\frac{w_0}{a} = \frac{A}{V^{2/\alpha+2}} + \frac{B}{V^{3/2}} + \frac{C}{V^6}$$

$$A = \left(\frac{2}{5}\left(1 + 4\left(\frac{2}{\alpha}\right)^{5/6}\right)\right)^{1/2}$$

$$B = e^{0.298/\alpha} - 1 + 1.478\left(1 - e^{-0.077\alpha}\right)$$

$$C = 3.76 + e^{4.19/\alpha^{0.418}}$$

L'ensemble des paramètres et équations précitées viennent valider le concept de la présente invention proposant la réalisation de sources laser avec ce type de gradient d'indice.

Ce type de structure permet non seulement d'augmenter le seuil d'apparition des effets non linéaires ainsi que l'endommagement optique mais elle permet également de réduire les pertes liées aux courbures ou micro-courbures en augmentant la différence d'indice (i.e. l'effet de guidage optique), puisque le paramètre $V_c$ est augmenté.

La figure 5 illustre l'évolution du rayon du mode normalisé au rayon de coeur d'une fibre en fonction du paramètre fréquence normalisée et en fonction du gradient d'indice, la courbe 5a est relative à un coefficient $\alpha = 1$, la courbe 5b est relative à un coefficient $\alpha = 2$, la courbe 5c est relative à un coefficient $\alpha$ infini.

Un calcul similaire à celui développé précédemment pour une fibre optique à échelon d'indice mais pour une fibre à gradient parabolique effilée donne l'évolution du rayon du mode en fonction de z.

Dans ce cas, la différence d'indice relative est $\Delta = 4\ 10^{-3}$ (quatre fois plus grande que pour une fibre à échelon d'indice) et la longueur d'onde de coupure $V_c = 3.518$ est prise pour la longueur d'onde de $0.8\mu m$

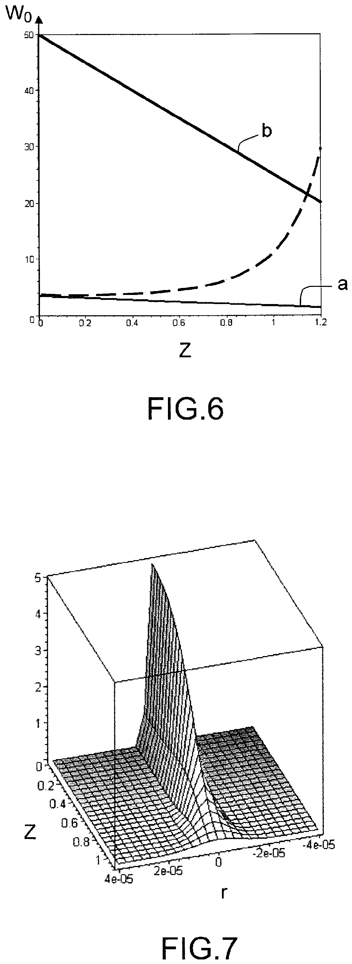

La figure 6 illustre l'évolution du rayon du mode $HE_{11}$ exprimé en $\mu m$ en fonction de la distance dans une structure effilée à profil parabolique, sont également représentés les rayons de coeur (courbe a) et de gaine (courbe b).

La figure 7 illustre l'évolution de l'éclairement en fonction de la distance dans la partie conique pour une fibre à profil parabolique dont les paramètres sont les suivants : un rayon $a = 3{,}446\ \mu m$, une variation $\Delta = 4.10^{-3}$, une longueur d'onde de coupure $\lambda_c = 0{,}8\ \mu m$. A la longueur d'onde signal laser ($\lambda = 1{,}07\ \mu m$), le paramètre fréquence normalisée initiale est égal à $V = 2{,}623$ pour une conicité identique à celle prise en compte dans l'analyse d'une fibre effilée à échelon d'indice.

Il apparait ainsi que l'emploi d'une fibre laser à profil d'indice parabolique permet non seulement d'obtenir un confinement important à la longueur d'onde laser, ce qui réduit la valeur du seuil pour l'émission cohérente mais également que le couplage avec une partie conique permet d'augmenter les seuils d'endommagement optique aux extrémités.

Système selon l'invention comportant plusieurs fibres laser couplées

Dans le cas de deux guides parallèles, aux paramètres opto-géométriques identiques (modes caractérisés par une même constante de propagation $\beta$), avec un espacement tel que les parties évanescentes puissent intercepter en partie le guide adjacent, en absence de pertes différentielles, les équations couplées s'écrivent :

$$\frac{d}{dz}\begin{vmatrix} a_1(z) \\ a_2(z) \end{vmatrix} + i\begin{vmatrix} \beta & C \\ C & \beta \end{vmatrix}\begin{vmatrix} a_1(z) \\ a_2(z) \end{vmatrix} = \begin{vmatrix} 0 \\ 0 \end{vmatrix}$$

où $a_j(z)$ correspondent à l'amplitude des champs complexes véhiculés par les guides $j=1,2$ et C est le coefficient de couplage entre guides.

La solution de ces équations pour une amplitude incidente $a_1(0)$ et $a_2(0)$ en phase est :

$$a_1(z) = a_1(0)\cos(Cz) - ia_2(0)\sin(Cz)$$

$$a_2(z) = a_2(0)\cos(Cz) - ia_1(0)\sin(Cz)$$

soit en module $|a_j|^2$ ce qui correspond à l'éclairement :

$$\left|a_1(z)\right|^2 = a_1^2(0)\cos^2(Cz) + a_2^2(0)\sin^2(Cz)$$

$$\left|a_2(z)\right|^2 = a_2^2(0)\cos^2(Cz) + a_1^2(0)\sin^2(Cz)$$

Dans le cas où un seul champ est incident, on retrouve la relation du coupleur linéaire :

$$\left|a_1(z)\right|^2 = a_1^2(0)\cos^2(Cz)$$

$$\left|a_2(z)\right|^2 = a_1^2(0)\sin^2(Cz)$$

En présence de deux champs incidents mais avec une différence de phase entre eux $\Delta\phi$ :

$$a_1(0) = a_1$$

$$a_2(0) = a_2 e^{i\Delta\phi}$$

On obtient les solutions suivantes :

$$\left|a_1(z)\right|^2 = a_1^2(0)\cos^2(Cz) - a_1(0)a_2(0)\sin(2Cz)\sin(\Delta\phi) + a_2^2(0)\sin^2(Cz)$$

$$\left|a_2(z)\right|^2 = a_2^2(0)\cos^2(Cz) + a_1(0)a_2(0)\sin(2Cz)\sin(\Delta\phi) + a_1^2(0)\sin^2(Cz)$$

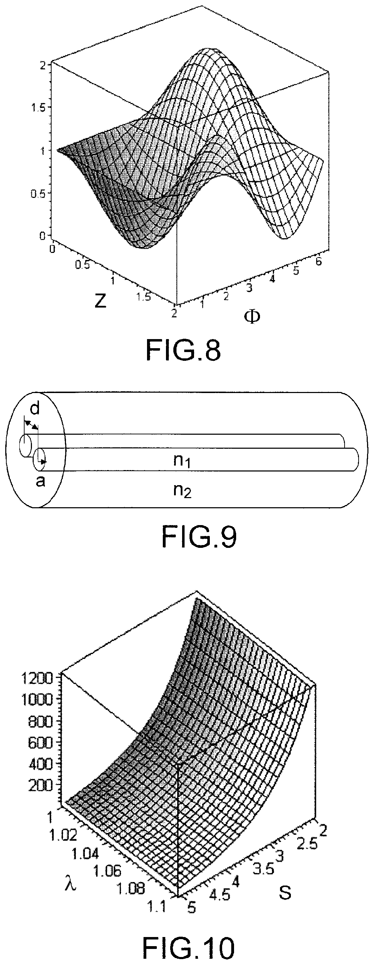

Un tracé de l'évolution de l'éclairement $|a_1(z)|^2$ à une longueur d'onde donnée est porté sur la figure 8 avec les paramètres suivants: $a_1(0)=1$, $a_2(0)=1$ et $C=1$.

Généralement, le coupleur linéaire exploite la propriété d'adressage de la puissance de sortie en fonction de l'excitation d'un des deux guides. Pour cette application, on ne s'intéresse pas aux relations de phase entre deux ondes couplées simultanément aux deux extrémités. En revanche, si l'on cherche à obtenir un transfert cohérent l'analyse du comportement du coupleur prenant en compte la phase relative initiale entre les deux champs s'impose, ce qui explique l'analyse précédente.

De manière encore plus générale, en présence de deux guides couplés caractérisés par différence de constante de propagation $\Delta\beta = \beta_1 - \beta_2$ entre les structures, on obtient :

$$\left|a_1(z)\right|^2 = \frac{1}{\left(\frac{\Delta\beta}{2}\right)^2 + C^2}\left[\begin{array}{l} C^2\cos^2\xi(a_1^2 - a_2^2) - a_1 a_2 \Delta\beta C\cos\phi\sin^2\xi + \left(\frac{\Delta\beta}{2}\right)^2 a_1^2 + a_2^2 C^2 \\ -2a_1 a_2 C\sin\phi\sqrt{C^2 + \left(\frac{\Delta\beta}{2}\right)^2}\cos\xi\sin\xi \end{array}\right]$$

$$\left|a_2(z)\right|^2 = \frac{1}{C^2 + \left(\frac{\Delta\beta}{2}\right)^2}\left[\begin{array}{l} -C^2\cos^2\xi(a_1^2 - a_2^2) + a_1 a_2 \Delta\beta C\cos\phi\sin^2\xi + \left(\frac{\Delta\beta}{2}\right)^2 a_2^2 + a_1^2 C^2 \\ +2a_1 a_2 C\sin\phi\sqrt{C^2 + \left(\frac{\Delta\beta}{2}\right)^2}\cos\xi\sin\xi \end{array}\right]$$

$$\text{avec : } \xi = z\sqrt{C^2 + \left(\frac{\Delta\beta}{2}\right)^2}$$

Pour $\phi = 0$ et en présence d'un seul champ incident sur le coupleur ($a_2(0)=0$), on obtient la relation classique du coupleur directionnel à désaccord de constante de propagation :

$$\frac{\left|a_2(z)\right|^2}{\left|a_1(0)\right|^2} = \frac{C^2}{C^2 + \left(\frac{\Delta\beta}{2}\right)^2} \sin^2\left(\sqrt{C^2 + \left(\frac{\Delta\beta}{2}\right)^2}\, z\right)$$

Pour deux guides diélectriques identiques à symétrie de révolution cylindrique illustré en figure 9, le coefficient de couplage C s'écrit :

$$C = \frac{\sqrt{2\Delta}}{a} \frac{U^2}{V^3} \frac{K_0(Wd/a)}{K_1^2(W)}$$

où d représente la distance entre les deux coeurs de rayon a, U et W sont les constantes de propagation transverses respectivement dans le coeur et dans la gaine de la fibre optique. $K_0(x)$ et $K_1(x)$ sont des fonctions de Bessel modifiées de seconde espèce d'ordre 0 et 1 et d'argument x.

Les paramètres U et W résultent de la résolution des équations de Maxwell appliquées à une structure de guide d'onde cylindrique à deux diélectriques.

$$\frac{U^2}{a^2} = k^2 n_1^2 - \beta^2$$

$$\frac{W^2}{a^2} = \beta^2 - k^2 n_2^2$$

$\beta$ est la constante de propagation liée au mode électromagnétique pouvant se propager en régime guidé. C'est à partir de ces relations que l'on définit le paramètre fréquence normalisée :

$$V^2 = U^2 + W^2 = k^2 a^2 n_1^2 2\Delta$$

A partir des données opto-géométriques des fibres à échelon d'indice, il est possible d'évaluer l'amplitude du coefficient de couplage en fonction de la séparation normalisée $s=d/a$ entre les deux axes longitudinaux de guidage. Dans le cas de fibre laser pour lesquelles $\lambda_c=0.75\mu m$, $\Delta=10^{-3}$ et $a=4.41\mu m$, on a l'évolution du coefficient de couplage entre les deux fibres illustrées en figure 10, et ce en fonction de la séparation normalisée entre les deux guides sur le domaine spectral occupé par le signal (laser).

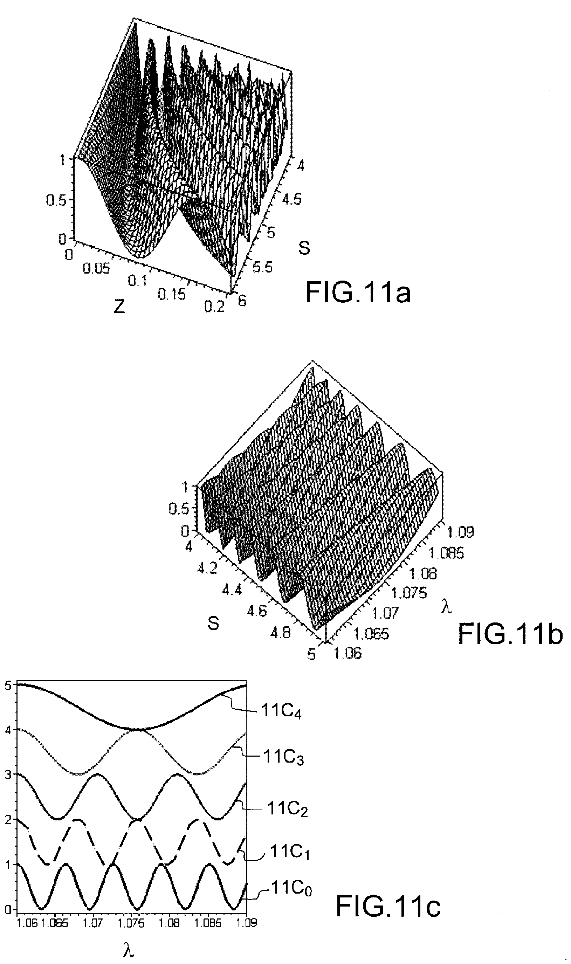

Les figures 11a, 11b et 11c illustrent le comportement du coupleur à fibre en fonction de la longueur d'onde, de la distance de propagation et de l'espacement normalisé entre les deux coeurs des fibres optiques.

Plus précisément la figure 11a illustre la variation de la puissance véhiculée par le guide excité du coupleur linéaire à fibres en fonction de s = d/a et de la distance de propagation à $1.07\mu m$, la figure 11b illustre la puissance à la cote z = 0.2m en fonction de la longueur d'onde et en fonction du paramètre s = d/a et la figure 11c illustre la distribution spectrale en extrémité du guide excité en fonction de la distance : z = 0.2m (courbe $11c_4$) à 1m (courbe $11c_0$) pour s = 4, avec ces courbes intermédiaires $11c_3$, $11c_2$, $11c_1$.

Dans le cas illustré, seul un des deux guides est initialement couplé à une onde optique et le couplage suit la loi suivante :

$$\frac{\left|a_1(z)\right|^2}{\left|a_1(0)\right|^2} = \cos^2(Cz)$$

Dans le cadre de la présente invention, il convient de considérer un coupleur linéaire à structure effilée. Une telle architecture revient à avoir un coefficient de couplage qui varie le long de la propagation.

Pour deux fibres couplées avec une conicité de 50%, le coefficient de couplage dépend de z via la dépendance des différents paramètres :

$$C(z) = \frac{\sqrt{2\Delta}}{a(z)} \frac{U(z)^2}{V(z)^3} \frac{K_0(W(z)d(z)/a(z))}{K_1^2(W(z))}$$

puisque $V(z) = ka(z)n_1\sqrt{2\Delta}$ , il s'ensuit que les valeurs des constantes de propagation transverses sont également fonction de $z$ :

$$V(z)^2 = U(z)^2 + W(z)^2 = k^2 a(z)^2 n_1^2 2\Delta$$

Il s'avère que le rapport $d(z)/a(z)$ est constant quel que soit z pour un étirement linéaire donc homothétique (conicité constante).

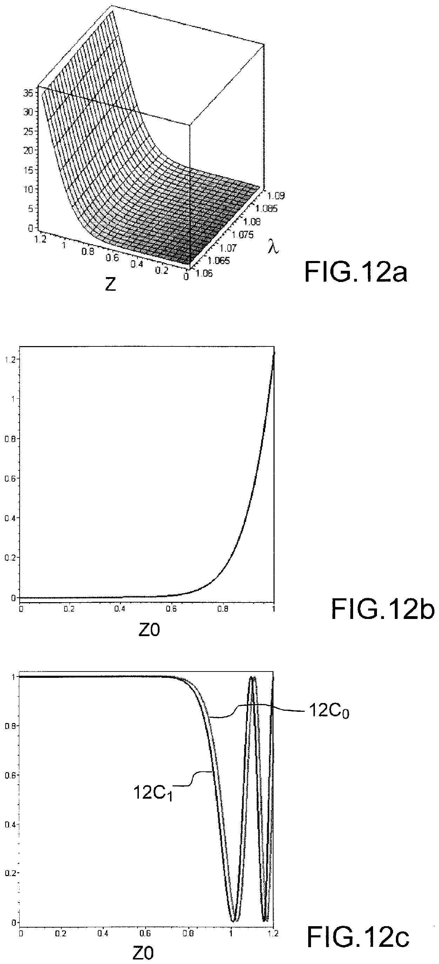

La figure 12a représente l'évolution du coefficient de couplage (m$^{-1}$) local en fonction de la distance z et selon la longueur d'onde signal en $\mu$m.

Pour évaluer l'effet de couplage d'un guide à l'autre, il convient de calculer le facteur de couplage effectif en fonction de z, ce que traduit l'intégrale :

$$C_{eff}z = \int_0^z C(z')dz'$$

La figure 12b donne le facteur de couplage effectif $C_{eff}z$ avec la distance z dans la partie effilée.

Avec ces variations longitudinales du coefficient de couplage, l'éclairement du guide excité voit son évolution présentée sur la figure 12c, qui suit la loi :

$$\frac{|a_1(z)|^2}{|a_1(0)|^2} = \cos^2\left(\int_0^z C(z')dz\right)$$

La figure 12c illustre la distribution d'éclairement normalisée du guide excité dans une configuration de coupleur linéaire à structure conique à $1.07\,\mu$m (courbe $12c_0$) et à $1.09\,\mu$m (courbe $12c_1$) en fonction de la distance de propagation.

Le concept multi-voies à fibres optique peut être étendu et les équations de couplage en absence de pertes peuvent s'écrivent :

$$\frac{da_m}{dz} + i\beta_m a_m = -i\sum_{\substack{n=1 \\ n\neq m}}^{N} C_{mn}a_n$$

Exemples de réalisation de système multi-voies à fibres laser selon l'invention :

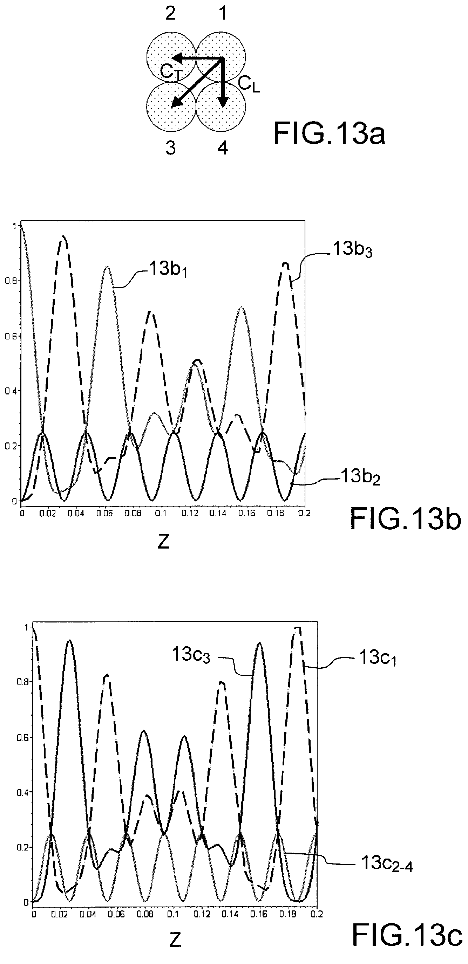

Selon une variante de l'invention, les fibres laser sont assemblées selon une symétrie carré comme illustré en figure 13a. Selon cette configuration, il convient de discerner deux coefficients de couplage entre fibres : un coefficient de couplage direct $C_L$ et un coefficient de couplage transverse $C_T$.

Les équations couplées s'écrivent :

$$\frac{da_1}{dz} + i\beta a_1 = -i\left(a_2 + a_4\right)C_L - ia_3 C_T$$

$$\frac{da_2}{dz} + i\beta a_2 = -i\left(a_1 + a_3\right)C_L - ia_4 C_T$$

$$\frac{da_3}{dz} + i\beta a_3 = -i\left(a_2 + a_4\right)C_L - ia_1 C_T$$

$$\frac{da_4}{dz} + i\beta a_4 = -i\left(a_1 + a_3\right)C_L - ia_2 C_T$$

On peut considérer que les guides sont identiques et les coefficients de couplage indépendants de l'état de polarisation. L'équation caractéristique est obtenue en substituant la fonction :

$$a_j = B_j e^{-i\beta z} e^{-i\Lambda z}$$

où $B_j$ et $\Lambda_j$ sont respectivement les éléments des vecteurs propres et les valeurs propres.

On obtient l'équation matricielle suivante

$$ie^{-i(\beta+\lambda)z} \begin{vmatrix} -\lambda & C_L & C_T & C_L \\ C_L & -\lambda & C_L & C_T \\ C_T & C_L & -\lambda & C_L \\ C_L & C_T & C_L & -\lambda \end{vmatrix} \begin{vmatrix} B_1 \\ B_2 \\ B_3 \\ B_4 \end{vmatrix} = 0$$

dont l'équation caractéristique s'écrit :

$$\begin{vmatrix} -\lambda & C_L & C_T & C_L \\ C_L & -\lambda & C_L & C_T \\ C_T & C_L & -\lambda & C_L \\ C_L & C_T & C_L & -\lambda \end{vmatrix} = 0$$

Les quatre valeurs propres sont :

$$\lambda_1 = C_T - 2C_L$$

$$\lambda_2 = C_T + 2C_L$$

$$\lambda_3 = \lambda_4 = -C_T$$

et les vecteurs propres associés sont :

$$\vec{B}_1 = \begin{vmatrix} -1 \\ 1 \\ -1 \\ 1 \end{vmatrix} \qquad \vec{B}_2 = \begin{vmatrix} 1 \\ 1 \\ 1 \\ 1 \end{vmatrix} \qquad \vec{B}_3 = \begin{vmatrix} -1 \\ 0 \\ 1 \\ 0 \end{vmatrix} \qquad \vec{B}_3 = \begin{vmatrix} 0 \\ -1 \\ 0 \\ 1 \end{vmatrix}$$

On définit ainsi quatre modes possibles.

En présence d'un champ incident unique, la répartition des éclairements est donnée par les relations :

$$I_1(z) = \frac{1}{4}\left(1 + 2\cos(2C_L z)\cos(2C_T z) + \cos^2(2C_L z)\right)$$

$$I_2(z) = \frac{1}{4}\sin^2(2C_L z)$$

$$I_3(z) = \frac{1}{4}\left(1 - 2\cos(2C_L z)\cos(2C_T z) + \cos^2(2C_L z)\right)$$

$$I_4(z) = \frac{1}{4}\sin^2(2C_L z)$$

avec $C_T(s) = C_L(s/\cos(\pi/4))$. La distribution des éclairements a été évaluée en fonction de la distance de propagation en considérant dans cet exemple les caractéristiques d'un coupleur linéaire à fibres avec un rapport $s$=5. Les figures 13b et 13c permettent d'observer les phénomènes de couplage entre guides en fonction de la distance de propagation et de la longueur d'onde. Plus précisément, la figure 13b illustre l'évolution des éclairements à 1.06$\mu$m en fonction de z pour une puissance unité injectée dans le guide 1 (courbe 13b$_1$). Les éclairements en 2 et 4 suivent la courbe 13b$_2$ et l'éclairement dans le guide 3 est représenté par la courbe 13b$_3$. La figure 13c illustre l'évolution des éclairements à 1.09$\mu$m en fonction de z pour une puissance unité injectée dans le guide 1 (courbe 13c$_1$). Les éclairements en 2 et 4 suivent la courbe 13c$_{2-4}$ et l'éclairement dans le guide 3 est représenté par la courbe 13c$_3$.

Le comportement du transfert entre les guides 1 et 3 traduit l'existence de deux coefficients de couplage ($C_T$ et $C_L$)

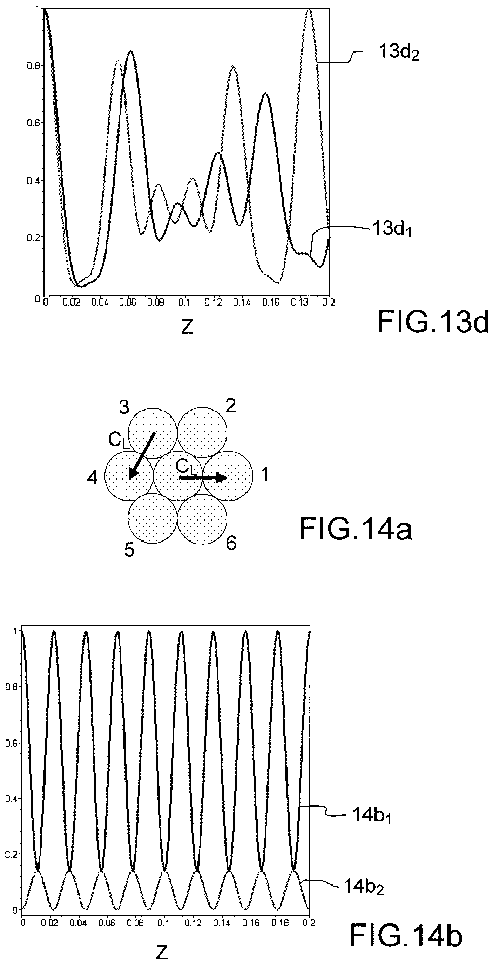

La figure 13d permet de mieux observer la loi de distribution des éclairements dans le guide excité en fonction de la longueur d'onde , illustrant la distribution de l'éclairement dans le guide 1 en fonction de z et pour $\lambda\lambda$= 1.06 (courbe 13d$_1$) et 1.09$\mu$m (courbe 13d$_2$).

Selon une autre variante de l'invention, le système laser peut comporter une géométrie d'empilement symétrique à configuration cylindrique.

Cette configuration est illustrée en figure 14a. Typiquement, l'éclairement initial, peut être porté par la fibre centrale. Dans ce cas, les éclairements véhiculés par les fibres 1 à 6 résultent du couplage entre fibres séparées par une distance commune s (arrangement triangle isocèle). Les lois d'éclairement s'écrivent :

$$I_0(z) = 1 - \frac{6}{7}\sin^2\left(\sqrt{7}C_L z\right)$$

$$I_n(z) = \frac{1}{7}\sin^2\left(\sqrt{7}C_L z\right) \qquad n = 1, \ldots, 6.$$

La figure 14b donne l'évolution de l'éclairement de la fibre central ainsi que celui obtenu sur une des fibres à couplage périphérique en fonction de la distance de propagation avec $s$ = 5 et à 1.07$\mu$m et illustre la distribution de l'éclairement dans la fibre centrale et dans une des six fibres en périphérie avec s = 5 à 1, 07 $\mu$m en fonction de la distance de propagation.

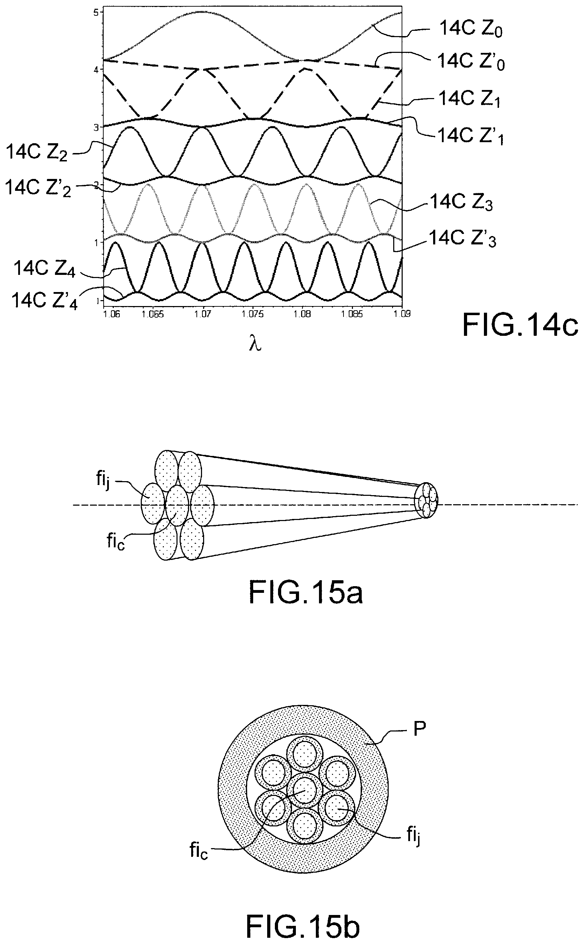

La figure 14c illustre la distribution spectrale de l'éclairement dans la fibre centrale et dans une des six fibres en périphérie avec s = 5 en fonction de la distance de propagation pour $z_0 = 0.2$, $z_1 = 0.4$, $z_2 = 0.6$, $z_3 = 0.8$ et $z_4 = 1m$. Les couples de courbes respectivement $(14cz_0, 14cz_0')$, $(14cz_1, 14cz_1')$, $(14cz_2, 14cz_2')$, $(14cz_3, 14cz_3')$, $(14cz_4, 14cz_4')$, sont relatives à la distribution spectrale en sortie de la fibre centrale, et en sortie d'une fibre adjacente.

Pour réaliser ce type de configuration, une géométrie possible consiste à prendre un faisceau de fibres laser avec un étirement à l'extrémité. Pour cela, il est possible d'associer N fibres fi autour d'une fibre centrale fic, une extrémité des fibres ayant subie un étirement de manière à obtenir une structure de couplage multiple. La figure 15a illustre une vue en perspective d'une telle association.

Il est également possible de réaliser une préforme composée de multiples barreaux pouvant typiquement être en silice localement dopés par une terre rare, comme illustré sur la figure 15b qui représente une vue en coupe d'une telle préforme P et de ses fibres en périphérie fij autour d'une fibre centrale fic. Le barreau central à double indice peut être dopé ou non dopé afin d'assurer la voie coupleur de sortie de l'émission laser. L'ensemble est ensuite fibré avec une loi d'homothétie sur les séparations entre coeurs puis une des extrémités subit un étirement.

Une telle fibre à multiples coeurs est adaptée au pompage efficace des zones dopées en exploitant les modes de la structure de guidage de l'onde de pompe qui présentent une dépendance en azimut non nulle.

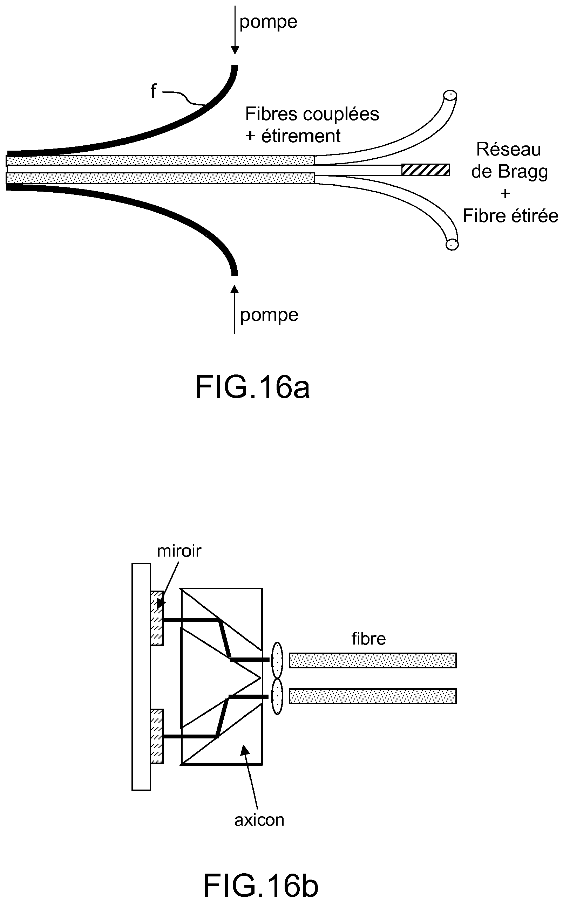

La géométrie du laser à fibres peut alors se présenter sous la forme illustrée en figure 16a :

- d'une fibre amorce destinée à recevoir une puissance de pompe issue de diodes laser ;
- d'un ensemble de fibres couplées radialement et étirée afin d'optimiser le couplage ;
- d'une fibre centrale par laquelle émerge le faisceau laser.

L'extrémité de cette fibre peut disposer d'un réflecteur de Bragg faisant office de miroir de rétro-action ou d'un miroir externe. Une auto-organisation s'effectue en fonction des aller et retour dans l'ensemble des cavités.

Selon une autre variante de l'invention, le système laser comprend :

- une structure de coeur à gradient d'indice parabolique ou triangulaire ;
- une association en coupleur multi-coeurs (monolithique sous forme d'une préforme spécifique ou multi-fibres), l'ensemble étant étiré à une extrémité ;
- une optique axicon à l'autre extrémité.

Une telle architecture permet de contrôler l'état de polarisation, ce qui revient à disposer de coupleurs spécifiques et à réaliser une opération de multiplexage sur les états de polarisation comme illustré en figure 16b.

De manière générale, pour réaliser les fibres présentant au moins sur un tronçon une région effilée, on peut procéder à une opération d'attaque chimique (par exemple avec l'emploi de l'acide fluorhydrique HF).

On peut également concevoir la soudure d'une fibre d'extrémité dédiée non dopée pour obtenir les profils recherchés (à condition d'optimiser les deux structures de guidage afin de réaliser l'adaptation modale).

Selon une variante de l'invention, les fibres à gradient d'indice de coeur peuvent être réalisées selon le procédé décrit ci-dessous.

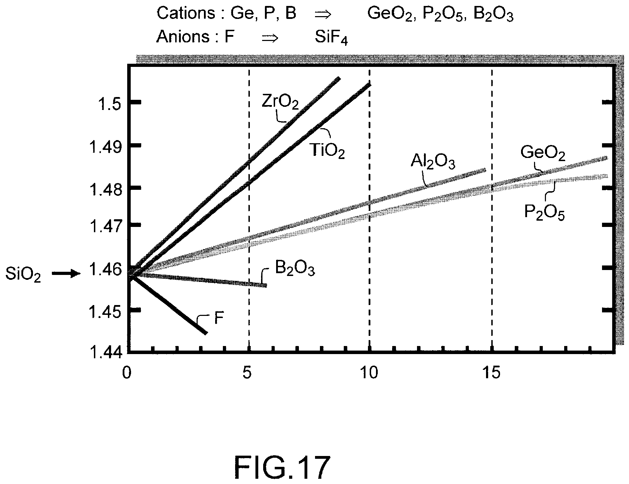

En effet il est connu que l'on peut faire croître l'indice d'un coeur de fibre en silice $SiO_2$ en lui incorporant des pourcentages molaires par exemple d'oxyde de germanium. La figure 17 illustre ainsi l'évolution de l'indice de réfraction de la silice composite, réalisée à partir d'un flux gazeux chargé en cations de type Ge, P ou B.

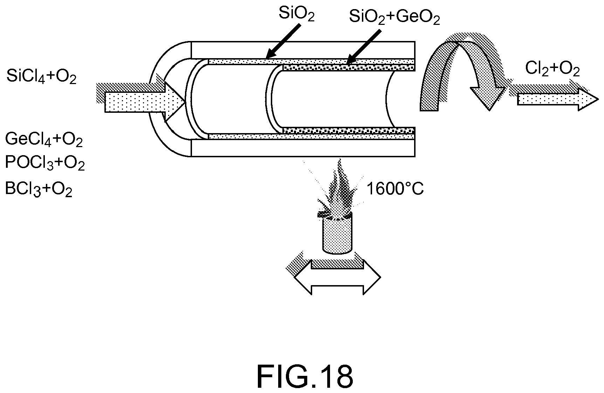

Ainsi en procédant à un dépôt chimique en phase vapeur, on peut obtenir au sein d'un barreau le dépôt de couches internes d'indice variable en fonction de la concentration du flux chargé en pourcentage variable de cations de type Ge, permettant d'obtenir par la même le gradient radial d'indice recherché dans la présente invention, comme illustré en figure 18.

## Revendications

1. Système à fibre laser de puissance émettant à une longueur d'onde signal ($\lambda$) et comportant plusieurs fibres monomodes, réparties de manière à créer un couplage modal entre lesdites fibres, une des fibres étant une fibre émergente pour la longueur d'onde signal du faisceau laser d'émission, chacune desdites fibres comportant au moins une gaine extérieure et un coeur, chacune desdites fibres présentant en son coeur un gradient d'indice radial et comportant au moins sur une partie de sa longueur, un tronçon de géométrie présentant un rayon de coeur de fibre à gradient décroissant entre une extrémité dite d'entrée du tronçon et une extrémité dite de sortie du tronçon, les paramètres de rayon de coeur et de variation d'indice entre la gaine et la fibre au niveau de l'extrémité d'entrée étant tels que la fréquence normalisée V définie à la longueur d'onde signal est inférieure à la fréquence normalisée de coupure Vc à partir de laquelle la fibre présente un caractère monomode.

**2.** Système à fibre laser de puissance selon la revendication 1, **caractérisé en ce que** le gradient d'indice est de type parabolique.

**3.** Système à fibre laser de puissance selon la revendication 1, **caractérisé en ce que** le gradient d'indice est de type triangulaire.

**4.** Système à fibre laser de puissance selon la revendication 1, **caractérisée en ce que** chacune desdites fibres comportent un tronçon de géométrie conique, un premier rayon de gaine ($r_1$) et un second rayon de coeur ($r_2$), les premier et second rayons sont définis respectivement par les équations suivantes :

$$r_1 (z) = r_1 c (1 - m_1 z)$$

$$r_2 (z) = r_2 c (1 - m_2 z)$$

**5.** Système à fibre laser de puissance selon l'une des revendications 1 à 4, **caractérisé en ce que** les fibres sont réparties selon une géométrie matricielle dans un plan perpendiculaire à la longueur desdites fibres.

**6.** Système à fibre laser de puissance selon l'une des revendications 1 à 4, **caractérisé en ce que** les fibres sont réparties de manière circulaire autour d'une fibre centrale.

**7.** Système à fibre laser de puissance selon l'une des revendications précédentes **caractérisé en ce qu'**il comprend une préforme comportant un ensemble de gaines et de coeurs de fibres unitaires.

**8.** Système à fibre laser de puissance selon l'une des revendications précédentes, **caractérisé en ce qu'**il comprend :

- une fibre amorce destinée à recevoir une puissance de pompe issue de diodes laser ;
- un ensemble de fibres couplées radialement et étirées afin d'optimiser le couplage ;
- une fibre centrale par laquelle émerge la longueur d'onde signal du faisceau laser.

**9.** Système à fibre laser de puissance selon la revendication 8, **caractérisé en ce que** la fibre émergente comporte une fonction miroir.

**10.** Système à fibre laser de puissance selon la revendication 9, **caractérisé en ce que** la fibre émergente comporte un réflecteur de Bragg.

**11.** Système à fibre laser de puissance selon l'une des revendications précédentes **caractérisé en ce qu'**il comprend des moyens de type axicon couplés aux extrémités des fibres opposées à celles comportant les tronçons coniques.

**12.** Système à fibre laser de puissance selon l'une des revendications précédentes **caractérisé en ce qu'**il comporte au moins une fibre présentant une gaine en silice.

**13.** Système à fibre laser de puissance selon l'une des revendications précédentes **caractérisé en ce qu'**il comporte au moins une fibre présentant un coeur de fibre comprenant de la silice chargée en $GeO_2$.

**14.** Système à fibre laser de puissance selon la revendication 13, **caractérisé en ce que** le coeur de fibre comprend des couches périphériques à taux variables de $GeO_2$ de manière à assurer un gradient d'indice radial au sein du coeur.

**15.** Système à fibre laser de puissance selon l'une des revendications précédentes **caractérisé en ce qu'**il comporte au moins une fibre présentant un coeur de fibre en silice dopée avec des ions terre rare.

**Patentansprüche**

**1.** Leistungslaserfasersystem, das mit einer Signalwellenlänge ($\lambda$) emittiert und mehrere Monomodefasern umfasst, die so verteilt sind, dass eine modale Kopplung zwischen den Fasern erzeugt wird, wobei eine der Fasern eine Faser ist, die für die Signalwellenlänge des emittierten Laserstrahls austritt, wobei jede der Fasern mindestens eine äußere Hülle und einen Kern umfasst, wobei jede der Fasern in ihrem Kern einen radialen Gradientenindex aufweist und mindestens auf einem Teil ihrer Länge einen Abschnitt mit einer Geometrie umfasst, die einen Faserkernradius mit abnehmendem Gradienten zwischen einem als Eingang bezeichneten Ende des Abschnitts und einem als Ausgang bezeichneten Ende des Abschnitts aufweist, wobei die Kernradiusparameter und Indexvariationsparameter zwischen der Hülle und der Faser auf Höhe des Eingangsendes derart sind, dass die für die Signalwellenlänge normalisierte Frequenz V niedriger als die normalisierte Grenzfrequenz Vc ist, ab der die Faser einen Monodode-Charakter aufweist.

2. Leistungslaserfasersystem nach Anspruch 1, **dadurch gekennzeichnet, dass** der Gradientenindex vom Typ parabolisch ist.

3. Leistungslaserfasersystem nach Anspruch 1, **dadurch gekennzeichnet, dass** der Gradientenindex vom Typ dreieckig ist.

4. Leistungslaserfasersystem nach Anspruch 1, **dadurch gekennzeichnet, dass** jede der Fasern einen Abschnitt mit kegelförmiger Geometrie, einen ersten Hüllenradius ($r_1$) und einen zweiten Kernradius ($r_2$) umfasst, wobei der erste und zweite Radius jeweils durch die folgenden Formeln definiert sind:

$$r_1(z) = r_1c(1 - m_1z)$$

$$r_2(z) = r_2c(1 - m_2z)$$

5. Leistungslaserfasersystem nach einem der Ansprüche 1 bis 4, **dadurch gekennzeichnet, dass** die Fasern gemäß einer Matrizengeometrie in einer senkrechten Ebene zur Länge der Fasern verteilt sind.

6. Leistungslaserfasersystem nach einem der Ansprüche 1 bis 4, **dadurch gekennzeichnet, dass** die Fasern kreisförmig um eine mittlere Faser verteilt sind.

7. Leistungslaserfasersystem nach einem der vorherigen Ansprüche, **dadurch gekennzeichnet, dass** es eine Vorform enthält, die eine Einheit aus Hüllen und Kernen einzelner Fasern umfasst.

8. Leistungslaserfasersystem nach einem der vorherigen Ansprüche, **dadurch gekennzeichnet, dass** es Folgendes umfasst:

   - eine Startfaser, die dazu bestimmt ist, eine von Laserdioden ausgegebene Pumpleistung aufzunehmen;
   - einen Satz Fasern, die radial gekoppelt und gestreckt sind, um die Kopplung zu optimieren;
   - eine mittlere Faser, durch die die Signalwellenlänge des Laserstrahls austritt.

9. Leistungslaserfasersystem nach Anspruch 8, **dadurch gekennzeichnet, dass** die austretende Faser eine Spiegelfunktion umfasst.

10. Leistungslaserfasersystem nach Anspruch 9, **dadurch gekennzeichnet, dass** die austretende Faser einen Bragg-Spiegel umfasst.

11. Leistungslaserfasersystem nach einem der vorherigen Ansprüche, **dadurch gekennzeichnet, dass** es Mittel vom Typ Axicon umfasst, die mit den Enden der Fasern gegenüber jenen, die die kegelförmigen Abschnitte umfassen, gekoppelt sind.

12. Leistungslaserfasersystem nach einem der vorherigen Ansprüche, **dadurch gekennzeichnet, dass** es mindestens eine Faser umfasst, die eine Hülle aus Siliciumdioxid aufweist.

13. Leistungslaserfasersystem nach einem der vorherigen Ansprüche, **dadurch gekennzeichnet, dass** es mindestens eine Faser umfasst, die einen Faserkern aufweist, der mit $GeO_2$ geladenes Siliciumdioxid enthält.

**14.** Leistungslaserfasersystem nach Anspruch 13, **dadurch gekennzeichnet, dass** der Faserkern Peripherschichten mit variablen $GeO_2$-Raten enthält, um einen radialen Gradientenindex im Kern sicherzustellen.

**15.** Leistungslaserfasersystem nach einem der vorherigen Ansprüche, **dadurch gekennzeichnet, dass** es mindestens eine Faser umfasst, die einen Faserkern aus Siliciumdioxid dotiert mit Seltene-Erden-Ionen aufweist.

**Claims**

**1.** A power laser fibre system emitting at a signal wavelength ($\lambda$) and comprising a plurality of single-mode fibres, distributed so as to generate modal coupling between said fibres, one of the fibres being an emergent fibre for the signal wavelength of the emission laser beam, each of said fibres comprising at least one outer sheath and one core, each of said fibres having a radial graded index at its core and comprising, at least on part of its length, a geometrical section having a graded fibre core radius that decreases between an input end of the section and an output end of the section, the core radius and index variation parameters between the sheath and the fibre at the input end being such that the normalised frequency V defined at the signal wavelength is less than the normalised cut-off frequency Vc, on the basis of which the fibre becomes single-mode.

**2.** The power laser fibre system according to claim 1, **characterised in that** the graded index is of the parabolic type.

**3.** The power laser fibre system according to claim 1, **characterised in that** the graded index is of the triangular type.

**4.** The power laser fibre system according to claim 1, **characterised in that** each of said fibres comprises a conical geometrical section, a first sheath radius ($r_1$) and a second core radius ($r_2$), the first and second radii are respectively defined by the following equations:

$$r_1(z) = r_1c(1 - m_1z);$$

$$r_2(z) = r_2c(1 - m_2z).$$

**5.** The power laser fibre system according to any one of claims 1 to 4, **characterised in that** the fibres are distributed according to a matrix geometry in a plane perpendicular to the length of said fibres.

**6.** The power laser fibre system according to any one of claims 1 to 4, **characterised in that** the fibres are distributed in a circular manner around a central fibre.

**7.** The power laser fibre system according to any one of the preceding claims, **characterised in that** it comprises a preform comprising a set of individual fibre sheaths and cores.

**8.** The power laser fibre system according to any one of the preceding claims, **characterised in that** it comprises:

- a pigtail fibre intended to receive pump power from laser diodes;
- a set of fibres radially coupled and stretched so as to optimise the coupling;
- a central fibre, from which the signal wavelength of the laser beam emerges.

**9.** The power laser fibre system according to claim 8, **characterised in that** the emergent fibre comprises a mirror function.

**10.** The power laser fibre system according to claim 9, **characterised in that** the emergent fibre comprises a Bragg reflector.

**11.** The power laser fibre system according to any one of the preceding claims, **characterised in that** it comprises means of the axicon type coupled to the ends of the fibres that are opposite those comprising the conical sections.

**12.** The power laser fibre system according to any one of the preceding claims, **characterised in that** it comprises at least one fibre having a silica sheath.

13. The power laser fibre system according to any one of the preceding claims, **characterised in that** it comprises at least one fibre having a fibre core comprising silica charged with $GeO_2$.

14. The power laser fibre system according to claim 13, **characterised in that** the fibre core comprises peripheral layers with variable amounts of $GeO_2$ so as to ensure a radial graded index within the core.

15. The power laser fibre system according to any one of the preceding claims, **characterised in that** it comprises at least one fibre having a fibre core made of silica doped with rare-earth ions.

FIG.1

FIG.2

FIG.3a

FIG.3b

FIG.3c

FIG.4

FIG.5

FIG.6

FIG.7

FIG.8

FIG.9

FIG.10

FIG.11a

FIG.11b

FIG.11c

FIG.12a

Z0

FIG.12b

$12C_0$

$12C_1$

Z0

FIG.12c

FIG.13a

FIG.13b

FIG.13c

FIG.13d

FIG.14a

FIG.14b

14C $Z_0$
14C $Z'_0$
14C $Z_1$
14C $Z'_1$
14C $Z_2$
14C $Z'_2$
14C $Z_3$
14C $Z'_3$
14C $Z_4$
14C $Z'_4$

$\lambda$

## FIG.14c

$fi_j$
$fi_c$

## FIG.15a

P
$fi_c$
$fi_j$

## FIG.15b

pompe

f

Fibres couplées
+ étirement

Réseau
de Bragg
+
Fibre étirée

pompe

FIG.16a

miroir

fibre

axicon

FIG.16b

FIG.17

FIG.18

## RÉFÉRENCES CITÉES DANS LA DESCRIPTION

**Documents brevets cités dans la description**

- US 5333218 A

**Littérature non-brevet citée dans la description**

- **D.GLOGE.** Weakly guiding fibers. *Appl.Opt.,* Octobre 1971, vol. 10 (10), 2252
- **XIE WEEN et al.** Single mode parabolic gain guiding optical fiber with core diameter up to 200 mum. *International Journal of Infrared and Milimeter Waves,* 28 Février 2008, vol. 29
- Loss analysis of single-mode fiber splices. *Bell Syst.Tech. J.,* 1977, vol. 56 (5), 703-719
- **D. GLOGE ; E.A.J. MARCATILI.** Multimode theory of graded core fibers. *Bell Sys.Tech.J.,* 1973, vol. 52, 1563-1578
- **W.A. GAMBLING ; D.N. PAYNE ; H. MATSUMURA.** Cut-off frequency in radially inhomogeneous single-mode fibre. *Electr. Lettes,* 03 Mars 1977, vol. 13 (5), 139
- **D. MARCUSE.** Gaussian approximation of the fundamental modes of graded-index fibers. *JOSA,* Janvier 1978, vol. 68 (1), 103